# EUROPÄISCHE PATENTSCHRIFT

(11) **EP 3 044 071 B1**
(45) Veröffentlichungstag und Bekanntmachung des Hinweises auf die Patenterteilung: **20.02.2019**
(21) Anmeldenummer: 14752784.0
(22) Anmeldetag: 13.08.2014
(51) Int. Cl.: B62D 1/19, B62D 1/184

(54) **ANORDNUNG MIT ZUMINDEST EINEM FEDERKÖRPER UND ZUMINDEST EINEM SEPARAT AUSGEBILDETEN ARRETIERTEIL**
ASSEMBLY HAVING AT LEAST ONE SPRING BODY AND AT LEAST ONE SEPARATELY FORMED LOCKING PART
SYSTÈME POURVU D'AU MOINS UN CORPS ÉLASTIQUE ET D'AU MOINS UN ÉLÉMENT DE BLOCAGE FORMÉ SÉPARÉMENT

(30) Priorität: 10.09.2013 DE 102013109931
(43) Veröffentlichungstag der Anmeldung: 20.07.2016
(73) Patentinhaber: ThyssenKrupp Presta AG, 9492 Eschen (LI); thyssenkrupp AG, 45143 Essen (DE)
(72) Erfinder: BLÄTTLER, Simon, 9472 Grabs (CH)
(74) Vertreter: thyssenkrupp Intellectual Property GmbH
(86) Internationale Anmeldenummer: PCT/EP2014/002216
(87) Internationale Veröffentlichungsnummer: WO 2015/036077

(56) Entgegenhaltungen:
- EP-A2- 1 975 036
- WO-A1-2010/094050
- WO-A1-2011/147503
- DE-A1-102008 007 094
- US-A1- 2006 090 586
- US-A1- 2013 298 717

## Beschreibung

Die vorliegende Erfindung betrifft eine Anordnung mit zumindest einem Federkörper und zumindest einem separat ausgebildeten Arretierteil zum Eingriff in ein Eingriffselement einer Lenksäule eines Fahrzeuges, wobei der Federkörper und das Arretierteil um eine gemeinsame Schwenkachse schwenkbar gelagert oder lagerbar sind und der Federkörper zumindest eine Federzunge zur federnden Belastung des Arretierteils und zumindest ein Befestigungsteil zur Befestigung des Federkörpers auf einem Bolzen der Lenksäule aufweist. Darüber hinaus betrifft die Erfindung auch eine Lenksäule für ein Fahrzeug.

Gattungsgemäße Anordnungen sind z.B. aus der WO 2011/147503 A1 bekannt. Dort wird das Arretierteil mittels Mitnehmerarmen durch Schwenken des Bolzens und des Federkörpers aus einem entsprechenden Eingriffselement in Form eines Laschenabschnitts herausgehoben, um eine Lenksäule mit einer solchen Anordnung verstellen zu können.

Ein Problem der gattungsgemäßen Anordnung, wie sie in der WO 2011/147503 A1 gezeigt ist, besteht darin, dass es im Missbrauchsfall durch Schlag oder Druck auf das Lenkrad bzw. die Lenksäule zu einem Festklemmen des Arretierteils in dem Eingriffselement kommen kann. Wird dann versucht, den Federkörper samt Arretierteil so zu verschwenken, dass das Arretierteil nicht mehr in das entsprechende Eingriffselement eingreift, so kann es beim Stand der Technik zu einem Verbiegen oder Abbrechen der Mitnehmerarme des Federkörpers kommen.

Aufgabe der Erfindung ist es, gattungsgemäße Anordnungen dahingehend zu verbessern, dass dieses Problem beseitigt ist. Gelöst wird diese Aufgabe durch eine Anordnung gemäß Patentanspruch 1.

Es ist somit vorgesehen, dass der Federkörper zumindest eine Rasteinrichtung zum Ein- und Ausrasten des Federkörpers in zumindest eine und aus zumindest einer Gegenrasteinrichtung des Arretierteils aufweist.

Durch ein Zusammenwirken der erfindungsgemäß vorgesehenen Rasteinrichtung mit der Gegenrasteinrichtung ist es möglich, dass der Federkörper in dem oben genannten Missbrauchsfall, in dem das Arretierteil im Eingriffselement verklemmt ist, aus dem Arretierteil ausrastet, ohne dass es hierbei zu einer Beeinträchtigung oder Zerstörung des Federkörpers oder des Arretierteils kommt. Ist das Arretierteil dann wieder frei und nicht mehr im Eingriffselement verklemmt, kann die Rasteinrichtung des Federkörpers wieder in die Gegenrasteinrichtung des Arretierteils einrasten, sodass die erfindungsgemäße Anordnung wieder voll funktionsfähig ist. Günstigerweise werden der Federkörper und/oder das Arretierteil bzw. ihre Rasteinrichtung und Gegenrasteinrichtung beim Ein- und Ausrasten ausschließlich elastisch verformt. Es kommt also günstigerweise zu keinen plastischen Umformungen.

Die Arretierwirkung des Arretierteils wird bevorzugt durch den Eingriff des Arretierteils in das Eingriffselement bewirkt und kann für verschiedene Zwecke der Lenksäule bestimmt sein. Dabei ist es durch eine Umschaltung oder eine Betätigung möglich, die Arretierwirkung je nach Bedarf ein- und auszuschalten. Die Arretierwirkung wird dabei durch ein Schwenken des Arretierteils in eine Eingriffsstellung, in der es in das Eingriffselement eingreift, bewirkt. Insbesondere kann das Arretierteil bei Bedarf die Position einer verstellbaren Lenksäule arretieren und/oder eine Verbindung eines Energieabsorptionsmittels mit einem Teil der Lenksäule ermöglichen. Mit Vorteil ist es zur Verbesserung der Funktion vorgesehen, dass die Bewegung des Arretierteils zumindest in Richtung einer Endposition, bevorzugt in Richtung der Eingriffsstellung, einer federnden Vorspannung mittels der Federzunge des Federkörpers ausgesetzt ist. Das Arretierteil ist als separates Bauteil ausgebildet, wodurch eine besonders gut zur Arretierung geeignete Ausbildung ermöglicht ist und die Wahl des Werkstoffs den Erfordernissen angepasst werden kann, während der Federkörper besonders gut zur Erfüllung der Federwirkung und auch der Mitnahmewirkung ausgebildet sein kann. Unter einer Mitnahmewirkung bzw. Mitnahme ist im Sinne der Erfindung eine Übertragung der Bewegung zwischen zwei Körpern, insbesondere dem Federkörper und dem Arretierteil, zu verstehen.

Durch die erfindungsgemäße Ausbildung ist es möglich, dass der Federkörper eine Doppelfunktion erfüllt. So kann die Federzunge das Arretierteil in Richtung hin zur Eingriffsstellung vorspannen bzw. belasten, z. B. um das Arretierteil am Eingriffselement zu arretieren. Die Vorspannung des Arretierteils in Richtung hin zu seiner Eingriffsstellung kann durch direkten Kontakt der Federzunge mit dem Arretierteil vom Federkörper auf das Arretierteil übertragen werden. Eine Übertragung dieser Vorspannung ist aber auch über den Eingriff zwischen Rasteinrichtung und Gegenrasteinrichtung möglich. Die Mitnahmefunktion ist besonders für die Bewegung des Arretierteils in Gegenrichtung, also aus der Eingriffsstellung in eine Freigabestellung wichtig. Auch diese Übertragung der Bewegung des Federkörpers auf das Arretierteil in Richtung hin zur Freigabestellung kann über den Eingriff zwischen Rasteinrichtung und Gegenrasteinrichtung realisiert werden. Indem der Federkörper beide Funktionen erfüllt, ergibt sich ein insgesamt sehr einfacher Aufbau. Durch den Einsatz des Federkörpers werden zudem Toleranzunterschiede in den verschiedenen Einzelteilen gut ausgeglichen.

Besonders bevorzugte Ausgestaltungsformen sehen in diesem Sinne vor, dass der Federkörper einstückig ausgeführt ist. Der Federkörper kann z.B. als umgeformtes Blechteil ausgeführt sein. Besonders bevorzugt handelt es sich dabei um ein einstückiges umgeformtes Blechteil. Bei der Federzunge kann es sich z.B. um eine Blattfeder handeln.

Bevorzugte Ausgestaltungsformen der Erfindung können auch vorsehen, dass der Federkörper einen von Wänden des Federkörpers teilweise umschlossenen Aufnahmehohlraum zur Aufnahme zumindest eines Teils des Arretierteils aufweist. Das Arretierteil kann dann zumindest teilweise in dem von Wänden des Federkörpers teilweise umschlossenen Aufnahmehohlraum angeordnet werden bzw. sein.

Für die Frage, wo die Rasteinrichtung am Federkörper angeordnet ist, gibt es verschiedene Lösungen. Bei einer ersten Art von Ausgestaltungsformen kann vorgesehen sein, dass der Federkörper zusätzlich zur Federzunge zumindest einen Mitnehmerarm zur Mitnahme des Arretierteils bei einer Schwenkbewegung des Federkörpers um die Schwenkachse aufweist und die Rasteinrichtung am Mitnehmerarm ausgebildet ist. Die Mitnehmerarme sind grundsätzlich aus dem oben genannten Stand der Technik bekannt. Bevorzugt sind sie bei der Erfindung federnd ausgebildet. Sie können einander gegenüberliegend angeordnet sein, sodass zwischen ihnen das Arretierteil angeordnet werden kann. Im Gegensatz zum oben genannten Stand der Technik greifen der oder die Mitnehmerarme aber über eine ein- und ausrastbare Rasteinrichtung an der Gegenrasteinrichtung des Arretierteils und damit am Arretierteil an. In dieser Art der Ausgestaltungsform der Erfindung ist günstigerweise vorgesehen, dass die Vorspannung des Arretierteils in Richtung hin zur Eingriffsstellung mittels der Federzunge des Federkörpers erfolgt, während die Mitnahmefunktion, also die Bewegung bzw. das Verschwenken des Arretierteils in Richtung hin zur Freigabestellung über die Mitnehmerarme und den Eingriff der Rasteinrichtung in die Gegenrasteinrichtung erfolgt.

In einer vereinfachten Ausgestaltungsform kann auf die Mitnehmerarme aber auch verzichtet werden. So kann z.B. vorgesehen sein, dass die Rasteinrichtung an der Federzunge ausgebildet ist. Sowohl die Rasteinrichtung als auch die Gegenrasteinrichtung können zumindest einen Rastvorsprung aufweisen. Besonders bevorzugt ist vorgesehen, dass die Rasteinrichtung oder die Gegenrasteinrichtung zumindest zwei voneinander distanziert angeordnete Rastvorsprünge aufweist, welche in Richtung aufeinander zu weisen. Genauso gut ist es möglich, dass die Rasteinrichtung oder die Gegenrasteinrichtung zumindest eine Eingriffsöffnung aufweist, welche von einem Anschlagbereich oder zumindest zwei einander gegenüberliegenden Anschlagbereichen begrenzt ist. Es kann also sowohl die Rasteinrichtung am Federkörper als auch die Gegenrasteinrichtung am Arretierteil als Rastvorsprung bzw. Rastvorsprünge ausgeführt sein. Das entsprechende Gegenstück in Form der Rasteinrichtung oder Gegenrasteinrichtung kann dann eben als Eingriffsöffnung ausgeführt sein, in die in der eingerasteten Stellung der oder die Rastvorsprünge eingreifen. Sowohl die Anschlagbereiche der Eingriffsöffnung als auch die entsprechenden Oberflächen der Rastvorsprünge können abgeschrägt oder abgerundet ausgebildet sein, um das Ein- und/oder Ausrasten von Rasteinrichtung und Gegenrasteinrichtung zu vereinfachen.

Die Rasteinrichtung und die Gegenrasteinrichtung können so ausgebildet sein und miteinander zusammenwirken, dass im eingerasteten Zustand ein gewisses Spiel zwischen ihnen vorhanden ist. Dies bedeutet, dass abhängig von der Relativstellung zwischen Federkörper und Arretierteil in manchen Winkelstellungen erst ein gewisses Weiterschwenken des Federkörpers um die Schwenkachse notwendig ist, bis der Federkörper das Arretierteil in Richtung hin zur Eingriffsstellung vorspannt bzw. belastet und/oder das Arretierteil in Richtung hin zur Freigabestellung mitnimmt. Um dieses Spiel zu erzeugen, kann vorgesehen sein, dass die Eingriffsöffnung zumindest entlang einer Kreisbahn um die Schwenkachse längs erstreckt ist. Da sowohl der Federkörper als auch das Arretierteil bei ihrer Bewegung zwischen Eingriffsstellung und Freigabestellung jeweils um die Schwenkachse geschwenkt werden, gilt dies auch für die Rasteinrichtung und die Gegenrasteinrichtung, sodass die Eingriffsöffnung eben, wenn ein entsprechendes Spiel gewünscht wird, zumindest entlang einer Kreisbahn um die Schwenkachse längserstreckt ausgeführt sein kann. Natürlich muss die Eingriffsöffnung hierzu nicht zwingend kreisbahnförmig ausgebildet sein. Z. B. kann die Eingriffsöffnung auch eine Rechteckform oder dergleichen aufweisen, in der Platz für eine entsprechende Kreisbahn ist. Zur geschilderten Vorspannfunktion und/oder Mitnahmefunktion kommt es dann erst, wenn z.B. der oder die Rastvorsprünge an einem Anschlagbereich, welcher die Eingriffsöffnung begrenzt, anschlagen.

Allgemein ist günstigerweise vorgesehen, dass das Arretierteil im eingerasteten Zustand der Rasteinrichtung in der Gegenrasteinrichtung beim Verschwenken des Federkörpers in zumindest einer der Schwenkrichtungen um die Schwenkachse mit dem Federkörper zwangsgekoppelt ist. Im eingerasteten Zustand kann dabei das oben genannte Spiel zwischen Rasteinrichtung und Gegenrasteinrichtung realisiert sein, sodass es zur Zwangskopplung erst ab einer gewissen Winkelstellung zwischen Arretierteil und Federkörper kommt. Im ausgerasteten Zustand muss das Arretierteil nicht zwangsweise über den vollen Winkelbereich von 360° unabhängig vom Federkörper um die Schwenkachse verschwenkbar sein. Es kann auch ausreichen, dass dies nur über einen begrenzten Winkelbereich möglich ist.

Eine erfindungsgemäße Anordnung weist in bevorzugten Ausgestaltungsformen zusätzlich einen Bolzen auf. An diesem kann der Federkörper mittels seines Befestigungsteils bezüglich eines Verschwenkens um die Schwenkachse drehfest befestigt sein. Dies bedeutet, dass jedes Drehen des Bolzens um die Schwenkachse zwangsweise zu einem entsprechenden Schwenken des Federkörpers um die Schwenkachse führt. Die drehfeste Verbindung kann z.B. über einen Formschluss erreicht werden. Die Schwenkachse verläuft günstigerweise im Bolzen, vorzugsweise koaxial zum Bolzen.

In bevorzugten Ausgestaltungsformen ist vorgesehen, dass das Arretierteil bezüglich einer Schwenkbewegung um die Schwenkachse ausschließlich über das Zusammenwirken von Rasteinrichtung und Gegenrasteinrichtung mit dem Federkörper und dem Bolzen zwangsgekoppelt ist. In diesem Sinn ist günstigerweise vorgesehen, dass das Arretierteil zumindest bereichsweise frei schwenkbar auf dem Bolzen angeordnet ist. Dies bedeutet, dass die Verbindung zwischen Arretierteil und Bolzen so ausgeführt ist, dass das Arretierteil ohne den Federkörper auf dem Bolzen frei schwenkbar angeordnet wäre. Dies kann über einen Schwenkwinkel von 360° aber auch über einen kleineren Schwenkwinkelbereich so realisiert sein. Es kann also ausreichen, wenn das Arretierteil zumindest bereichsweise frei schwenkbar auf dem Bolzen angeordnet ist. Der Bolzen kann als massive Stange ausgeführt sein, aber auch einen Hohlraum aufweisen. Er kann z.B. also auch rohr- oder hülsenförmig realisiert werden.

Es kann sich bei dem Bolzen um einen an sich bekannten Spannbolzen einer Feststelleinrichtung oder Energieabsorptionseinrichtung einer Lenksäule handeln. Der Bolzen kann durch eine Bolzenaufnahmeöffnung des Arretierteils hindurchgeführt sein. Im Sinne einer einfachen Montage von Federkörper und Arretierteil auf dem Bolzen sehen bevorzugte Ausgestaltungsformen vor, dass das Befestigungsteil des Federkörpers und/oder die Bolzenaufnahmeöffnung eine nach außen offene Einstecköffnung aufweisen. Mittels der jeweiligen Einstecköffnung können Federkörper und Arretierteil gegebenenfalls gemeinsam in einer Richtung orthogonal zur Bolzenlängsachse auf den Bolzen aufgeschoben, vorzugsweise aufgeschnappt, werden.

Günstigerweise ist die Bolzenaufnahmeöffnung im Arretierteil so ausgestaltet, dass wie oben bereits ausgeführt, der Bolzen anschlagfrei in der Bolzenaufnahmeöffnung des Arretierteils, vorzugsweise über 360° und mehr, gedreht werden kann. Hierfür kann die Bolzenaufnahmeöffnung, gegebenenfalls abgesehen von der Einstecköffnung, z. B. einen kreisrunden Querschnitt aufweisen.

Die Rasteinrichtung wie auch die Gegenrasteinrichtung sind günstigerweise in radialer Richtung von der Schwenkachse distanziert angeordnet.

Besonders bevorzugte Ausgestaltungsformen der Erfindung sehen vor, dass die Federzunge das Arretierteil in allen Betriebsstellungen federnd belastet. Bei solchen Ausgestaltungsformen ist somit ein permanentes Einwirken der Federzunge auf das Arretierteil vorgesehen. Steht das Arretierteil im Eingriff mit dem Eingriffselement, so drückt die Federzunge das Arretierteil sicher an oder in das Eingriffselement. Liegen Rasteinrichtung und Gegenrasteinrichtung hingegen in der Freigabestellung des Arretierteils aneinander an, so drückt die Federzunge das Arretierteil in den Eingriff zwischen Rasteinrichtung und Gegenrasteinrichtung. In beiden Fällen ist das Arretierteil mittels Federzunge vorgespannt, so dass es nicht zum ungewünschten Klappern des Arretierteils kommen kann.

Zur Dämpfung von Schwingungen und/oder Geräuschen, kann es vorgesehen sein, den Federkörper vollständig oder an bestimmten Oberflächenbereichen mit einem dämpfenden Überzug auszubilden oder am Federkörper Dämpfer anzuordnen.

Die Erfindung betrifft auch eine Lenksäule für ein Fahrzeug, welche zumindest ein erstes Bauteil und zumindest ein zweites Bauteil aufweist, wobei die Bauteile in zumindest einem Betriebszustand der Lenksäule relativ zueinander bewegbar sind und wobei die Bauteile über eine Feststelleinrichtung und/oder eine Energieabsorptionseinrichtung in einem anderen Betriebszustand der Lenksäule aneinander befestigt oder aneinander befestigbar sind, wobei vorgesehen ist, dass die Feststelleinrichtung und/oder die Energieabsorptionseinrichtung zumindest eine erfindungsgemäße Anordnung aufweist. So kann z.B. vorgesehen sein, dass die erfindungsgemäße Anordnung an einem ersten der Bauteile angeordnet ist und das Arretierteil in der Eingriffsstellung in das Eingriffselement eingreift, welches an dem anderen der Bauteile angeordnet ist.

Bei einem dieser Bauteile der Lenksäule kann es sich z. B. um eine Lenkspindellagereinheit handeln, in der die Lenkspindel, an der das Lenkrad befestigt wird, drehbar gelagert ist. Bei dem anderen der Bauteile der Lenksäule kann es sich beispielsweise um eine sogenannte Konsoleneinheit handeln, welche am Fahrzeug selbst fixiert ist bzw. fixiert wird. Lenksäulen mit zwei relativ zueinander bewegbaren, vorzugsweise verschiebbaren Bauteilen sind an sich als verstellbare Lenksäulen in zahlreichen Ausgestaltungsformen beim Stand der Technik bekannt. Durch Verstellen der beiden Bauteile, also z. B. Lenkspindellagereinheit und Konsoleneinheit relativ zueinander kann die Position des Lenkrades an den Fahrer angepasst werden. Eine Feststelleinrichtung der Lenksäule weist dabei zumindest eine Stellung auf, in der die beiden Bauteile zur Verstellung relativ zueinander bewegt werden können. Weiters weist die Feststelleinrichtung zumindest eine zweite Stellung auf, in der die Bauteile form- und/oder reibschlüssig in ihrer Position relativ zueinander fixiert sind. Beim Stand der Technik ist es weiter bekannt, in Lenksäulen sogenannte Energieabsorptionseinrichtungen vorzusehen. Diese dienen dazu, im Crashfall, wenn das Fahrzeug auf ein Hindernis aufprallt, eine Verletzung des Fahrers durch Aufprall des Fahrers auf das Lenkrad möglichst zu vermeiden. Gattungsgemäße, an sich bekannte Energieabsorptionseinrichtungen dienen dabei dazu, dass die beiden genannten Bauteile der Lenksäule unter definierten Bedingungen relativ zueinander verschoben werden können, um die beim Auftreffen des Fahrers auf dem Lenkrad auftretenden Energien in einer für den Fahrer verträglichen Art und Weise zu absorbieren. Die genannten Feststelleinrichtungen und Energieabsorptionseinrichtungen können integriert als eine Einrichtung aber auch als voneinander getrennte Einrichtungen ausgeführt sein. Es ist nun möglich, solche Feststelleinrichtungen und/oder Energieabsorptionseinrichtungen einer Lenksäule mit einer erfindungsgemäßen Anordnung auszurüsten.

In der nachfolgenden Figurenbeschreibung werden die beispielhaft ausgesuchten Ausführungsbeispiele beschrieben, woraus sich auch bevorzugte Ausgestaltungsformen und Merkmale der Erfindung ergeben. Es zeigen:
Fig. 1 beispielhaft eine Lenksäule für ein Fahrzeug mit einer erfindungsgemäßen Anordnung gemäß des nachfolgend geschilderten ersten Ausführungsbeispiels;
Fig. 2 bis 8 Darstellungen zum ersten Ausführungsbeispiel einer erfindungsgemäßen Anordnung;
Fig. 9 bis 16 Darstellungen zu einem zweiten erfindungsgemäßen Ausführungsbeispiel einer Anordnung.

Gleichartige oder gleichwirkende Elemente werden in den Figuren mit denselben Bezugszeichen bezeichnet.

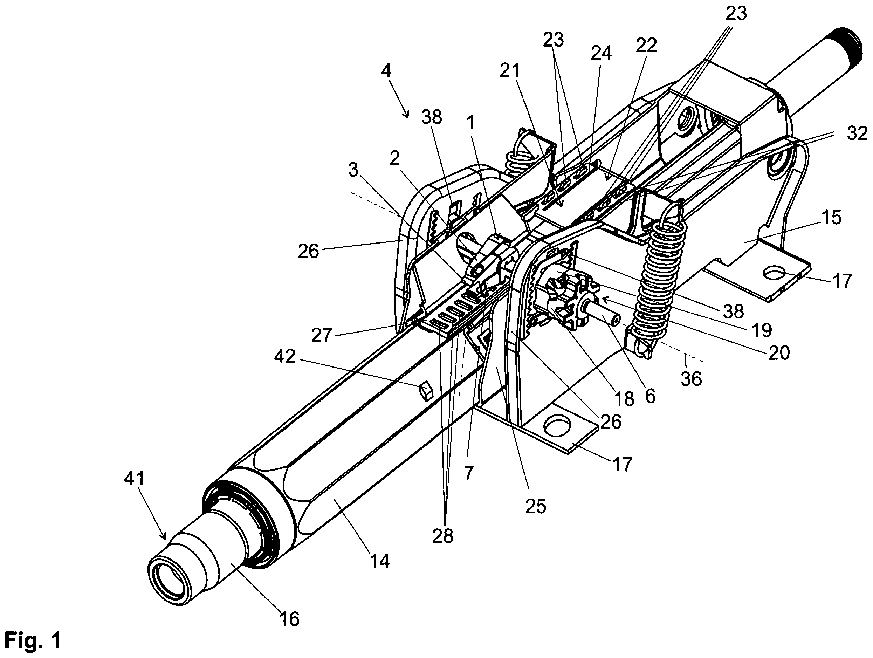

Die in Fig. 1 gezeigte Lenksäule ist in ihren Grundzügen aus der WO 2011/147503 A1 bekannt. Im Unterschied zu diesem Stand der Technik kommt hier allerdings eine erfindungsgemäße Anordnung aus Federkörper 1 und Arretierteil 3 zum Einsatz. Zusätzlich ist die in Fig. 1 dargestellte Lenksäule 4 mit dem Bolzen 6 ausgestattet. Bevor auf die erfindungswesentlichen Details eingegangen wird, wird aber zunächst der ansonsten an sich bekannte Aufbau der Lenksäule 4 kurz geschildert. Die Lenksäule 4 weist als zweites Bauteil 15 eine Konsoleneinheit auf, welche dazu vorgesehen ist, die Lenksäule 4 am Fahrzeug zu befestigen. Hierzu weist das zweite Bauteil 15 die Befestigungslaschen 17 auf. Das erste Bauteil 14 der gezeigten Lenksäule 4 ist eine Lenkspindellagereinheit, in der die Lenkspindel 16 drehbar gelagert ist. Zwischen dem ersten Bauteil 14 und dem zweiten Bauteil 15 ist in diesem Ausführungsbeispiel, wie an sich bekannt, das Zwischenteil 25 angeordnet. Das als Konsoleneinheit ausgebildete zweite Bauteil 15 weist zwei Seitenwangen 26 auf, zwischen denen die Lenkspindellagereinheit in Form des ersten Bauteils 14 gemeinsam mit dem Zwischenteil 25 in ihrer Position fixiert ist, wenn sich die Feststelleinrichtung 20 in ihrer Schließstellung befindet. In der geöffneten Stellung der Feststelleinrichtung 20 kann die Position des ersten Bauteils 14 in Form der Lenkspindellagereinheit relativ zum zweiten Bauteil 15, also zur Konsoleneinheit verstellt werden. Die Feststelleinrichtung 20 weist, wie an sich bekannt, einen als Spannbolzen ausgebildeten Bolzen 6 auf. Auf diesem befindet sich die Nockenscheibe 18 und die Nockenfolgerscheibe 19. Die Nockenfolgerscheibe 19 ist drehfest an der Seitenwange 26 befestigt. Die Nockenscheibe 18 ist am Bolzen 6 derart fixiert, dass sie mit diesem zwangsweise um die Schwenkachse 36 mitgedreht wird. Durch Verdrehen des Bolzens 6 kann die Feststelleinrichtung 20 in die geöffnete Stellung und auch in die Schließstellung gebracht werden. Dies ist an sich bekannt und muss nicht weiter erläutert werden. Zum Verdrehen des Bolzens 6 um seine Längsachse bzw. die Schwenkachse 36 kann ein Motor oder dergleichen vorgesehen sein. Bei einfachen Ausgestaltungsformen ist zu diesem Zweck am Bolzen 6 ein in Fig. 1 nicht dargestellte aber an sich bekannter, von Hand betätigbarer Hebel vorgesehen. Befindet sich die Feststelleinrichtung 20 in der geöffneten Stellung, so kann das erste Bauteil 14 relativ zum zweiten Bauteil 15 verschoben werden, wobei der Bolzen 6 in den Langlöchern 38 der Seitenwangen 26 mit verschoben wird. Im gezeigten Ausführungsbeispiel wird mittels der Feststelleinrichtung 20 in deren Schließstellung zur Arretierung der Höhenverstellung ein Formschluss zwischen den an der Seitenwange sichtbaren Verzahnungen hergestellt. Die Längsverstellung wird mittels eines Reib- bzw. Kraftschlusses zwischen den Seitenwangen arretiert. Die Feststelleinrichtung 20 kann aber auch genauso gut ausschließlich reib- bzw. kraftschlüssig oder ausschließlich formschlüssig ausgebildet sein oder Reib- und Formschluss kombinieren. Die Lenksäule 4 kann auch nur in eine Richtung, also in die Höhe oder in die Länge, verstellbar sein.

Um im Crashfall die durch Aufschlagen des Fahrers auf ein Lenkrad bzw. die Lenkspindel 16 in die Lenksäule 4 eingetragene Energie gezielt abbauen zu können, weist das vorliegende erste Ausführungsbeispiel zusätzlich zur Feststelleinrichtung 20 auch eine Energieabsorptionseinrichtung 21 auf. Diese sieht im gezeigten Ausführungsbeispiel eine Reißbiegelasche 22 vor, welche an dem ersten Bauteil 14 fixiert ist. Alternativ kann auch eine reine Biegelasche oder eine reine Reißlasche vorgesehen sein, wie dies beispielhaft in den Fig. 18 bis 21 der WO 2011/147503 A1 gezeigt ist. Diese Fixierung kann über unterschiedlichste, beim Stand der Technik bekannte Maßnahmen erreicht werden. In der dargestellten Ausgestaltungsform weist die Reißbiegelasche 22 Öffnungen 32 auf, durch die die am ersten Bauteil 14 fixierten Haken 23 hindurchgeführt sind. Das Zusammenwirken von Haken 23 und Öffnungen 32 führt zur gewünschten Befestigung der Reißbiegelasche 22 am ersten Bauteil 14. Die Reißbiegelasche 22 weist im gezeigten Ausführungsbeispiel einen Laschenabschnitt auf, in welchem eine Abfolge von Ausnehmungen 28 angeordnet ist. In diese Ausnehmungen 28 kann das Arretierteil 3 mit seinem zumindest einen Arretierzahn 10 eingreifen. Das Arretierteil 3 kann als Klinke, als Haken oder dergleichen ausgebildet sein. Bevorzugt ist das Arretierteil 3, wie dies auch im gezeigten Ausführungsbeispiel realisiert ist, schwenkbar auf dem Bolzen 6 gelagert.

Der Laschenabschnitt mit seinen Ausnehmungen 28 dient im gezeigten Ausführungsbeispiel als Eingriffselement 27, in das das Arretierteil 3 mit seinem Arretierzahn 10 eingreifen kann. Das Eingriffselement 27 bzw. der Laschenabschnitt sind dabei in der geschilderten Art und Weise am ersten Bauteil 14 fixiert. Das Arretierteil 3 ist durch seine Lagerung auf dem Bolzen 6 am zweiten Bauteil 15, also an der fahrzeugfesten Konsoleneinheit schwenkbar aber ansonsten fixiert. Kommt es nun im Crashfall zu einem Aufschlagen des Fahrers auf das hier nicht dargestellte, am Montagestutzen 41 der Lenkspindel 16 anzubringende, Lenkrad und damit auf die Lenkspindel 16, so wird letztere gemeinsam mit der Lenkspindellagereinheit in Form des ersten Bauteils 14 in Längsrichtung der Lenkspindel 16 in die Konsoleneinheit in Form des zweiten Bauteils 15 eingeschoben. Bei entsprechendem Energieeintrag kommt es dabei zum Umbiegen und Aufreißen der Reißbiegelasche 22 an den Schwächungen 24, da die Reißbiegelasche 22, wie bereits geschildert, einerseits am ersten Bauteil 14 und über das Arretierteil 3 andererseits aber auch am zweiten Bauteil 15 befestigt ist. Hierbei kann ein Anschlag 42 vorgesehen sein, der die Verstellung in der Längsachse begrenzt und nach Überschreiten einer vordefinierten Kraft wegbricht und damit die weitere Verschiebung, während der die Energieabsorption über die Reißbiegelasche 22 erfolgt, freigibt.

Betreffend der Ausgestaltung der Reißbiegelasche 22 ist festzustellen, dass durch eine Ausbildung der Lasche, bei der die Lasche entlang der Schwächung 24 aufgetrennt ist, in einfacher Weise, bei sonst gleicher Gestaltung, die Reißbiegelasche 22 in eine reine Biegelasche überführt ist. Günstig ist jedenfalls, dass ein Verbindungsbereich zwischen dem Laschenabschnitt und dem Haltebereich, in dem sich die Öffnungen 32 für die Aufnahme der Haken 23 befinden, bestehen bleibt.

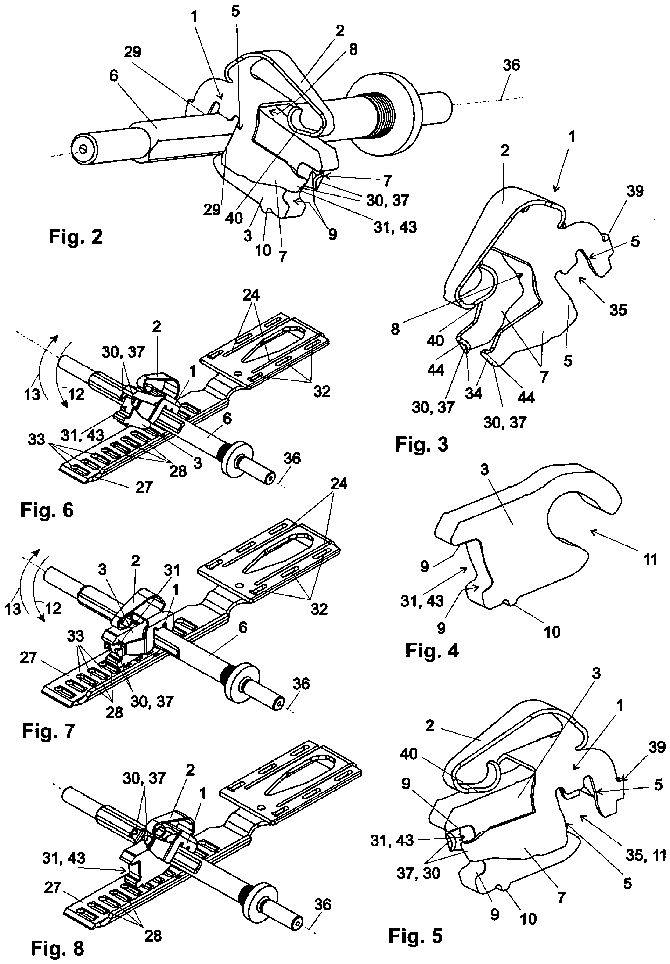

Der bisher geschilderte Grundaufbau der Lenksäule 4 ist an sich z. B. aus der WO 2011/147503 A1 bekannt und kann in unterschiedlichsten Ausgestaltungsformen variiert sein. Bezüglich der erfindungsgemäß ausgebildeten Anordnung aus Federkörper 1, Arretierteil 3 und gegebenenfalls Bolzen 6 des ersten Ausführungsbeispiels wird nun auf die hier nachfolgend beschriebenen Fig. 2 bis 8 verwiesen.

Fig. 2 zeigt, losgelöst von den anderen Bauteilen einer Lenksäule 4, das erste Ausführungsbeispiel einer erfindungsgemäßen Anordnung aus Federkörper 1 und Arretierteil 3, wobei diese beiden Teile auf einem Bolzen 6 einer Feststelleinrichtung 20 angeordnet sind. Es handelt sich hier um ein Beispiel, bei dem die in diesem Ausführungsbeispiel in Form der Rastvorsprünge 30 realisierte Rasteinrichtung 37 an Mitnehmerarmen 7 des Federkörpers 1 ausgebildet ist. Die Rasteinrichtung 37 wie auch die Mitnehmerarme 7 sind hier zusätzlich zur Federzunge 2 am Federkörper 1 ausgebildet. Dieser weist auch das Befestigungsteil 5 auf, mit dem er mittels Formschluss 29 so am Bolzen 6 befestigt ist, dass ein Drehen des Bolzens 6 um die Schwenkachse 36 zwangsläufig zu einer entsprechenden Drehbewegung des Federkörpers 1 führt, unabhängig davon, ob diese Drehung um die Schwenkachse 36 nun in der ersten Schwenkrichtung 12 in Form der Schließrichtung oder in Richtung der zweiten Schwenkrichtung 13, also in der Öffnungsrichtung erfolgt. Das Arretierteil 3 mit seinem Arretierzahn 10 zum Eingriff in das Eingriffselement 27 bzw. dessen Ausnehmungen 28 ist ebenfalls um die Schwenkachse 36 schwenkbar auf dem Bolzen 6 gelagert. Allerdings besteht keine direkte drehfeste Verbindung zwischen dem Bolzen 6 und dem Arretierteil 3. Im gezeigten Ausführungsbeispiel erfolgt die Schwenkbewegung des Arretierteils 3 sowohl in der ersten Schwenkrichtung 12 wie auch in der zweiten Schwenkrichtung 13 ausschließlich über das Einwirken des Federkörpers 1 auf das Arretierteil 3. Der eingerastete Zustand von Rasteinrichtung 37 und Gegenrasteinrichtung 43 ist in den Fig. 2, 5, 6 und 7 gezeigt. In diesem eingerasteten Zustand greifen die hier als Rastvorsprünge 30 ausgebildeten Rasteinrichtungen 37 der Mitnehmerarme 7 bzw. des Federkörpers 1 in eine zumindest entlang einer Kreisbahn um die Schwenkachse 36 längserstreckte Eingriffsöffnung 31 ein. Diese ist in den Schwenkrichtungen 12 und 13 gesehen an ihren einander gegenüberliegenden Enden durch die Anschlagbereiche 9 begrenzt. Diese Eingriffsöffnung 31 muss nicht zwangsläufig in Form einer Kreisbahn ausgebildet sein, wie dies dieses Ausführungsbeispiel auch zeigt. Die Eingriffsöffnung 31 bildet hier in diesem Ausführungsbeispiel aber jedenfalls die Gegenrasteinrichtung 43 des Arretierteils 3.

Im gezeigten Ausführungsbeispiel weisen die Rastvorsprünge 30 der Rasteinrichtung 37 an den Mitnehmerarmen 7 Schrägflächen 44 auf, die das Ein- und Ausrasten der Rasteinrichtung 37 aus der Gegenrasteinrichtung 43 vereinfachen. Wie eingangs bereits dargelegt, ist auch hier günstigerweise vorgesehen, dass sowohl der Federkörper 1 als auch das Arretierteil 3 beim Ein- und Ausrasten ausschließlich elastisch verformt werden. Fig. 3 zeigt den Federkörper aus Fig. 1 losgelöst von sämtlichen anderen Bauteilen. Gut zu sehen ist hier auch die sacklochartig ausgebildete, also einseitig offene Einstecköffnung 35, in die der Bolzen 6 bei der Montage des Federkörpers 1 eingeführt wird. Die, die Einstecköffnung 35 begrenzenden Seitenwände des Federkörpers 1 bilden das Befestigungsteil 5, welches hier der formschlüssigen Befestigung des Federkörpers 1 auf dem Bolzen 6 dient.

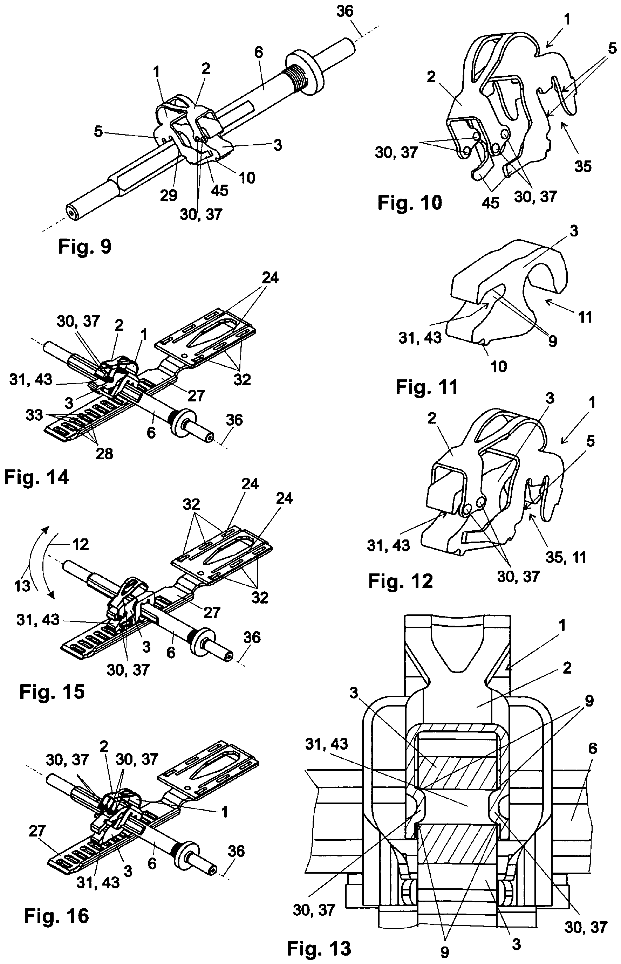

Die Zentrierbacken 39 dienen der Zentrierung des Arretierteils 3 im Aufnahmehohlraum 8 des Federkörpers 1. Sie können, wie in der Fig. 16 der WO 2011/147503 A1 gezeigt, ausgeführt sein und sind ein optionales Merkmal.

Gut zu sehen ist in Fig. 3 auch der gerundete Andrückabschnitt 40 des hier gewählten Ausführungsbeispiels der Federzunge 2 des Federkörpers 1. Beispielhaft eingezeichnet ist in Fig. 3 auch, dass die Rastvorsprünge 30 bzw. die Rasteinrichtung 37 mit einem weichen Überzug 34 überzogen sein können, um ein Klappern zu verhindern. Auch dieser Überzug ist ein optionales Merkmal. Auch andere Dämpfer sind möglich. Sie können genauso gut auch in die Gegenrasteinrichtung 43 integriert sein. Dies gilt insbesondere natürlich auch für den Überzug 34.

Fig. 4 zeigt das Arretierteil 3 dieses Ausführungsbeispiels mit seinem Arretierzahn 10 und der Eingriffsöffnung 31, welche hier die Gegenrasteinrichtung 43 bildet. Die Eingriffsöffnung 31 ist von den Anschlagbereichen 9 begrenzt. Gut zu sehen ist hier auch die beispielhaft gewählte sacklochförmige Ausbildung der Bolzenaufnahmeöffnung 11 mit der das Arretierteil 3 auf den Bolzen 6 aufgesetzt werden kann. Die einseitig offene Form der Bolzenaufnahmeöffnung 11 des Arretierteils 3 und der Einstecköffnung 35 des Federkörpers 1 erlauben eine besonders einfache Montage der erfindungsgemäßen Anordnung auf dem Bolzen 6, bei der Arretierteil 3 und Federkörper 1 gemeinsam auf den Bolzen 6 seitlich aufgeschoben werden können. Das Arretierteil 3 ist aufgrund der Ausgestaltungsform des Bolzens 6 und der Bolzenaufnahmeöffnung 11 für sich gesehen frei um die Schwenkachse 36 bzw. auf dem Bolzen 6 schwenkbar.

Der Vollständigkeit halber wird darauf hingewiesen, dass abweichend von dem gezeigten Ausführungsbeispiel natürlich die Rasteinrichtung 37 des Federkörpers 1 auch in Form einer entsprechenden Eingriffsöffnung 31 ausgebildet sein kann, wenn z.B. die Gegenrasteinrichtung 43 des Arretierteils 3 entsprechende Rastvorsprünge 30 trägt. Dies gilt auch für das nachfolgend geschilderte zweite Ausführungsbeispiel. Natürlich können auch ganz anders ausgeformte Rasteinrichtungen 37 und Gegenrasteinrichtungen 43 realisiert werden.

Die Fig. 6 bis 8 zeigen nun verschiedene Funktionsstellungen des ersten Ausführungsbeispiels einer erfindungsgemäßen Anordnung. In Fig. 6 und 7 sind die Rasteinrichtung 37 und die Gegenrasteinrichtung 43 jeweils ineinander eingerastet. Fig. 8 zeigt den ausgerasteten Zustand, nachdem das Arretierteil 3 durch eine axiale Belastung der Lenkspindel 16 verklemmt und gleichzeitig der Bolzen 6 zusammen mit dem Federkörper 1 in der zweiten Schwenkrichtung 13, also in Öffnungsrichtung geschwenkt wurde. In Fig. 6 ist das Arretierteil 3 in der Freigabestellung, in der es nicht in das Eingriffselement 27 bzw. dessen Ausnehmungen 28 eingreift. Fig. 7 zeigt die Eingriffsstellung, in der ein Eingriff zwischen Arretierteil 3 mit seinem Arretierzahn 10 und dem Eingriffselement 27 mit seinen Ausnehmungen 28 und den dazwischen angeordneten Stegen 33 vorliegt. Die Art des Eingriffs zwischen Arretierteil 3 und Eingriffselement 27 kann natürlich auch anders und mit anderen Elementen realisiert werden.

Um die Anordnung aus Federkörper 1 und Arretierteil 3 aus der in Fig. 6 gezeigten Freigabestellung in die in Fig. 7 gezeigte Eingriffsstellung in der ersten Schwenkrichtung 12 zu schwenken, wird der Bolzen 6 in die entsprechende Richtung um die Schwenkachse 36 gedreht. Die Federzunge 2 drückt dabei mit ihrem gerundeten Andrückstück 40 auf das Arretierteil 3, sodass dies zwangsweise dieser Schwenkbewegung in der ersten Schwenkrichtung 12 folgen muss. Wie in Fig. 6 auch gut zu sehen, ist günstigerweise dabei vorgesehen, dass die Vorspannung der Federzunge 2 dazu ausreicht, das Arretierteil 3 mit seinem oberen Anschlagbereich 9 gegen die Rastvorsprünge 30 der Rasteinrichtung 37 des Federkörpers 1 zu drücken. Hierdurch wird ein unnötiges Klappern in der Freigabestellung vermieden.

Bei entsprechend weitem Verschwenken des Bolzens 6 kommt es dann zum Eingriff des Arretierzahns 10 und damit des Arretierteils 3 in eine der Ausnehmungen 28 des Eingriffselementes 27. Trifft der Arretierzahn 10 beim Verschwenken des Arretierteils 3 in der ersten Schwenkrichtung 12 zufällig auf einen Steg 33, so erfolgt das Einrasten aufgrund der Federbelastung der Federzunge 2 spätestens am Anfang einer beginnenden Relativverschiebung zwischen dem Eingriffselement 27 und der erfindungsgemäßen Anordnung bzw. dem Bolzen 6. Dies ist an sich bekannt und muss nicht weiter erläutert werden.

Soll nun die erfindungsgemäße Anordnung von der in Fig. 7 gezeigten Eingriffsstellung in die in Fig. 6 gezeigte geöffnete Stellung um die Schwenkachse 36 geschwenkt werden, so wird der Bolzen 6 wie eingangs erläutert, z.B. über einen Motor oder einen hier nicht dargestellten Handhebel in der zweiten Schwenkrichtung 13 geschwenkt. Dabei wird über den Formschluss 29 und die dadurch realisierte drehfeste Verbindung zwischen Federkörper 1 und Bolzen 6 auch der Federkörper 1 mit um die Schwenkachse 36 geschwenkt. Sobald die Rastvorsprünge 30 der Rasteinrichtung 37 mit dem entsprechenden Anschlagbereich 9 der Gegenrasteinrichtung 43 in Kontakt kommen, wird das Arretierteil 3, sofern es nicht im Eingriffselement 27 verklemmt ist, in der zweiten Schwenkrichtung 13 mitgenommen, bis die in Fig. 6 gezeigte Stellung erreicht ist. Dieses Ausführungsbeispiel veranschaulicht dabei, dass bei dem Eingriff der Rasteinrichtung 37 in die Gegenrasteinrichtung 43 ein gewisses Spiel vorgesehen sein kann, sodass der Federkörper 1 ein Stück weit geschwenkt werden muss, bevor die Mitnehmerfunktion der Mitnahmearme 7 mit ihren Rastvorsprüngen 30 bzw. der Rasteinrichtung 37 in Kraft tritt.

Ist das Arretierteil 3 nun mit seinem Arretierzahn 10 z.B. aufgrund einer entsprechenden Druckbelastung in axialer Richtung auf der Lenkspindel 16 im Eingriffselement 27 verklemmt, so kann die Rasteinrichtung 37 hier durch elastische Verformung der Rastvorsprünge 30 und gegebenenfalls auch durch elastische Verformung der entsprechenden Bereiche des Arretierteils 3 aus der Gegenrasteinrichtung 43 ausrasten, sodass der Federkörper 1 zusammen mit dem Bolzen 6 weiter verdreht werden kann, während das im Eingriffselement 27 verklemmte Arretierteil 3 nicht mitgeschwenkt wird. Hierdurch wird erfindungsgemäß vermieden, dass es zu einer Beschädigung der Mitnehmerarme 7 bzw. des Federkörpers 1 oder des Arretierteils kommen kann.

Sobald die Druckbelastung auf der Lenkspindel 16 nachlässt, kann das Arretierteil 3 aus dem Eingriffselement 27 herausgelöst werden, ohne dass es hierdurch zu einer Zerstörung oder negativen Beeinträchtigung eines der Bauteile kommt. Bei einer entsprechenden Ausrichtung kann das Arretierteil 3 dann der Schwerkraft folgend aus dem Eingriffselement 27 herausschwenken. Es kann aber auch eine hier nicht dargestellte Feder vorgesehen sein, die das Arretierteil 3 in der zweiten Schwenkrichtung 13 federbelastet. Unabhängig davon kann aber ein zerstörungsfreies Wiedereinrasten von Rasteinrichtung 37 in die Gegenrasteinrichtung 43 erfolgen, wenn der Federkörper 1 zusammen mit dem Bolzen 6 wieder in die erste Schwenkrichtung 13 so weit geschwenkt wird, dass es zu einem entsprechenden Einrasten zwischen Rasteinrichtung 37 und Gegenrasteinrichtung 43 kommt. Die erfindungsgemäße Anordnung ist dann wieder vollständig einsatzbereit.

Der Vollständigkeit halber sei darauf hingewiesen, dass durch entsprechende Ausformung der Mitnehmerarme 7 auch eine seitliche Führung des Arretierteils 3 in dem Aufnahmehohlraum 8 des Federkörpers 1 möglich ist.

Während in dem bisher geschilderten ersten Ausführungsbeispiel die Rasteinrichtung 37 somit an Mitnehmerarmen 7 des Federkörpers 1 ausgebildet ist, zeigt das zweite Ausführungsbeispiel gemäß der Fig. 9 bis 16 eine erfindungsgemäße Variante einer Anordnung, bei der die Rasteinrichtung 37 in Form von Rastvorsprüngen 30 an der Federzunge 2 realisiert ist. Auf die Mitnehmerarme 7 kann in diesem Ausführungsbeispiel verzichtet werden. Um eine gewisse Seitenführung zu gewährleisten, können, wie hier gezeigt, Seitenführungsarme 45 vorgesehen sein, welche hier aber ausschließlich der Führung dienen.

Um Überschneidungen mit der Beschreibung des ersten Ausführungsbeispiels zu vermeiden, wird hier nur noch auf die Unterschiede eingegangen. Ansonsten gilt das zum ersten Ausführungsbeispiel Geschilderte analog auch für das zweite Ausführungsbeispiel.

Neben der Anordnung mit der Rasteinrichtung 37 direkt an der Federzunge 2 ist ein weiterer Unterschied zum ersten Ausführungsbeispiel, dass hier beim Eingriff der Rasteinrichtung 37 in Form der abgerundeten Rastvorsprünge 30 in die Gegenrasteinrichtung 43 in Form der Eingriffsöffnung 31 im Arretierteil 3 kein Spiel in einer der Schwenkrichtungen 12 und 13 vorgesehen ist. Dies ist besonders gut in der vergrößert dargestellten Fig. 13 zu sehen, bei der ein Schnitt durch die in der Gegenrasteinrichtung 43 eingerasteten Rasteinrichtungen 37 gezeigt ist. Die abgerundeten Flächen der Rastvorsprünge 30 dienen wiederum einem einfachen elastischen Ein- und Ausrasten von Rasteinrichtungen 37 und Gegenrasteinrichtung 43.

Im Unterschied zum ersten Ausführungsbeispiel wird die Schwenkbewegung des Federkörpers 1 im zweiten Ausführungsbeispiel sowohl in der ersten Schwenkrichtung 12 als auch in der zweiten Schwenkrichtung 13 immer von der Rasteinrichtung 37 auf das Arretierteil 3 übertragen. Durch den spielfreien Eingriff von Rasteinrichtung 37 und Gegenrasteinrichtung 43 kommt es auch hier in keiner Stellung zu einem Klappern des Arretierteils 3.

Fig. 14 zeigt den Zustand wie Fig. 6. Fig. 15 den Zustand wie Fig. 7 und Fig. 16 den Zustand wie Fig. 8. In Fig. 16 ist somit die Rasteinrichtung 37 aufgrund eines Verklemmens des Arretierteils 3 im Eingriffselement 27 bei gleichzeitigem Verschwenken des Federkörpers 1 in der zweiten Schwenkrichtung 13 aus der Gegenrasteinrichtung 43 des Arretierteils 3 ausgerastet. Das Wiedereinrasten erfolgt ebenfalls durch Verschwenken in der ersten Schwenkrichtung 12, sodass bei einem entsprechend weiten Schwenkwinkel wieder die Situation gemäß Fig. 15 erreicht wird. Fig. 10 zeigt den Federkörper 1 dieses Ausführungsbeispiels losgelöst von allen anderen Bauteilen. Die Darstellung in Fig. 11 entspricht der Darstellung in Fig. 4. Die Fig. 12 zeigt im zweiten Ausführungsbeispiel die Anordnung aus Federkörper 1 und Arretierteil 3 losgelöst von den anderen Bauteilen.

Der Vollständigkeit halber wird noch darauf hingewiesen, dass erfindungsgemäße Anordnungen natürlich auch in anders gearteten Lenksäulen 4, also insbesondere bei anders gearteten Feststelleinrichtungen 20 und/oder Energieabsorptionseinrichtungen 21 eingesetzt werden können. Z.B. gilt dies auch für die in den Fig. 12 und 17 sowie 22 bis 24 dargestellten Varianten der WO 2011/147503 A1, wenn man die dort gezeigten Anordnungen aus Federkörper 1 und Arretierteil 3 durch erfindungsgemäße Anordnungen ersetzt. Auch die Bolzenaufnahmeöffnung 11 und die Einstecköffnung 35 können natürlich in den, in der WO 2011/147503 A1 gezeigten Alternativen ausgebildet sein.

### Legende zu den Hinweisziffern:

| | | | |
|---|---|---|---|
| 1 | Federkörper | 31 | Eingriffsöffnung |
| 2 | Federzunge | 32 | Öffnung |
| 3 | Arretierteil | 33 | Steg |
| 4 | Lenksäule | 34 | Überzug |
| 5 | Befestigungsteil | 35 | Einstecköffnung |
| 6 | Bolzen | 36 | Schwenkachse |
| 7 | Mitnehmerarm | 37 | Rasteinrichtung |
| 8 | Aufnahmehohlraum | 38 | Langloch |
| 9 | Anschlagbereich | 39 | Zentrierbacken |
| 10 | Arretierzahn | 40 | gerundeter Andrückabschnitt |
| 11 | Bolzenaufnahmeöffnung | 41 | Montagestutzen |
| 12 | erste Schwenkrichtung | 42 | Anschlag |
| 13 | zweite Schwenkrichtung | 43 | Gegenrasteinrichtung |
| 14 | erstes Bauteil | 44 | Schrägfläche |
| 15 | zweites Bauteil | 45 | Seitenführungsarm |
| 16 | Lenkspindel | | |
| 17 | Befestigungslasche | | |
| 18 | Nockenscheibe | | |
| 19 | Nockenfolgerscheibe | | |
| 20 | Feststelleinrichtung | | |
| 21 | Energieabsorptionseinrichtung | | |
| 22 | Reißbiegelasche | | |
| 23 | Haken | | |
| 24 | Schwächung | | |
| 25 | Zwischenteil | | |
| 26 | Seitenwange | | |
| 27 | Eingriffselement | | |
| 28 | Ausnehmung | | |
| 29 | Formschluss | | |
| 30 | Rastvorsprung | | |

## Patentansprüche

1. Anordnung mit zumindest einem Federkörper (1) und zumindest einem separat ausgebildeten Arretierteil (3) zum Eingriff in ein Eingriffselement (27) einer Lenksäule (4) eines Fahrzeuges, wobei der Federkörper (1) und das Arretierteil (3) um eine gemeinsame Schwenkachse (36) schwenkbar gelagert oder lagerbar sind und der Federkörper (1) zumindest eine Federzunge (2) zur federnden Belastung des Arretierteils (3) und zumindest ein Befestigungsteil (5) zur Befestigung des Federkörpers (1) auf einem Bolzen (6) der Lenksäule (4) aufweist, **dadurch gekennzeichnet, dass** der Federkörper (1) zumindest eine Rasteinrichtung (37) zum Ein- und Ausrasten des Federkörpers (1) in zumindest eine und aus zumindest einer Gegenrasteinrichtung (43) des Arretierteils (3) aufweist.

2. Anordnung nach Anspruch 1, **dadurch gekennzeichnet, dass** der Federkörper (1) zusätzlich zur Federzunge (2) zumindest einen Mitnehmerarm (7) zur Mitnahme des Arretierteils (3) bei einer Schwenkbewegung des Federkörpers (1) um die Schwenkachse (36) aufweist und die Rasteinrichtung (37) am Mitnehmerarm (7) ausgebildet ist.

3. Anordnung nach Anspruch 1, **dadurch gekennzeichnet, dass** die Rasteinrichtung (37) an der Federzunge (2) ausgebildet ist.

4. Anordnung nach einem der Ansprüche 1 bis 3, **dadurch gekennzeichnet, dass** die Rasteinrichtung (37) oder die Gegenrasteinrichtung (43) zumindest einen Rastvorsprung (30) aufweist.

5. Anordnung nach einem der Ansprüche 1 bis 4, **dadurch gekennzeichnet, dass** die Rasteinrichtung (37) oder die Gegenrasteinrichtung (43) zumindest zwei voneinander distanziert angeordnete Rastvorsprünge (30) aufweist, welche in Richtung aufeinander zu weisen.

6. Anordnung nach einem der Ansprüche 1 bis 5, **dadurch gekennzeichnet, dass** die Rasteinrichtung (37) oder die Gegenrasteinrichtung (43) zumindest eine Eingriffsöffnung (31) aufweist, welche von einem Anschlagbereich (9) oder zumindest zwei einander gegenüberliegenden Anschlagbereichen (9) begrenzt ist.

7. Anordnung nach Anspruch 6, **dadurch gekennzeichnet, dass** die Eingriffsöffnung (31) zumindest entlang einer Kreisbahn um die Schwenkachse (36) längs erstreckt ist.

8. Anordnung nach einem der Ansprüche 1 bis 7, **dadurch gekennzeichnet, dass** die Anordnung zusätzlich einen Bolzen (6) aufweist, an dem der Federkörper (1) mittels seines Befestigungsteils (5) bezüglich eines Verschwenkens um die Schwenkachse (36) drehfest befestigt ist, wobei das Arretierteil (3) zumindest bereichsweise frei schwenkbar auf dem Bolzen (6) angeordnet ist und die Schwenkachse (36) im Bolzen (6) verläuft.

9. Anordnung nach einem der Ansprüche 1 bis 8, **dadurch gekennzeichnet, dass** das Arretierteil (3) im eingerasteten Zustand der Rasteinrichtung (37) in der Gegenrasteinrichtung (43) beim Verschwenken des Federkörpers (1) in zumindest einer Schwenkrichtung (12, 13) um die Schwenkachse (36) mit dem Federkörper (1) zwangsgekoppelt ist und/oder der Federkörper (1) im ausgerasteten Zustand der Rasteinrichtung (37) aus der Gegenrasteinrichtung (43) unabhängig vom Arretierteil (3) um die Schwenkachse (36) verschwenkbar ist.

10. Lenksäule (4) für ein Fahrzeug, welche zumindest ein erstes Bauteil (14) und zumindest ein zweites Bauteil (15) aufweist, wobei die Bauteile (14, 15) in zumindest einem Betriebszustand der Lenksäule (4) relativ zueinander bewegbar sind und wobei die Bauteile (14, 15) über eine Feststelleinrichtung (20) und/oder eine Energieabsorptionseinrichtung (21) in einem anderen Betriebszustand der Lenksäule (4) aneinander befestigt oder aneinander befestigbar sind, **dadurch gekennzeichnet, dass** die Feststelleinrichtung (20) und/oder die Energieabsorptionseinrichtung (21) zumindest eine Anordnung nach einem der Ansprüche 1 bis 9 aufweist.

## Claims

1. Arrangement having at least one spring body (1) and at least one separately formed locking part (3) for engagement in an engagement element (27) of a steering column (4) of a vehicle, wherein the spring body (1) and the locking part (3) are mounted or can be mounted pivotably about a common pivoting axis (36), and the spring body (1) has at least one spring tongue (2) for spring loading the locking part (3) and at least one fastening part (5) for fastening the spring body (1) on a bolt (6) of the steering column (4), **characterized in that** the spring body (1) has at least one latching device (37) for latching and unlatching the spring body (1) into at least one and from at least one mating latching device (43) of the locking part (3).

2. Arrangement according to Claim 1, **characterized in that** the spring body (1) has, in addition to the spring tongue (2), at least one driver arm (7) for taking along the locking part (3) during a pivoting movement of the spring body (1) about the pivoting axis (36), and the latching device (37) is formed on the driver arm (7).

3. Arrangement according to Claim 1, **characterized in that** the latching device (37) is formed on the spring tongue (2) .

4. Arrangement according to one of Claims 1 to 3, **characterized in that** the latching device (37) or the mating latching device (43) has at least one latching projection (30).

5. Arrangement according to one of Claims 1 to 4, **characterized in that** the latching device (37) or the mating latching device (43) has at least two latching projections (30), which are arranged spaced apart and point toward one another.

6. Arrangement according to one of Claims 1 to 5, **characterized in that** the latching device (37) or the mating latching device (43) has at least one engagement opening (31), which is delimited by a stop region (9) or by at least two mutually opposite stop regions (9).

7. Arrangement according to Claim 6, **characterized in that** the engagement opening (31) is elongated at least along a circular path around the pivoting axis (36).

8. Arrangement according to one of Claims 1 to 7, **characterized in that** the arrangement additionally has a bolt (6) on which the spring body (1) is secured by means of its fastening part (5) for conjoint rotation in respect of pivoting about the pivoting axis (36), wherein the locking part (3) is arranged so as to be freely pivotable on the bolt (6), at least over a certain range, and the pivoting axis (36) extends in the bolt (6).

9. Arrangement according to one of Claims 1 to 8, **characterized in that**, in the latched state of the latching device (37) in the mating latching device (43), the locking part (3) is positively coupled to the spring body (1) when the spring body (1) pivots in at least one pivoting direction (12, 13) about the pivoting axis (36), and/or, in the unlatched state of the latching device (37) from the mating latching device (43), the spring body (1) can be pivoted about the pivoting axis (36) independently of the locking part (3).

10. Steering column (4) for a vehicle, which has at least one first component (14) and at least one second component (15), wherein the components (14, 15) can be moved relative to one another in at least one operating state of the steering column (4) and wherein the components (14, 15) are secured to one another or can be secured to one another by means of a fixing device (20) and/or an energy absorption device (21) in another operating state of the steering column (4), **characterized in that** the fixing device (20) and/or the energy absorption device (21) has/have at least one arrangement according to one of Claims 1 to 9.

## Revendications

1. Système pourvu d'au moins un corps élastique (1) et d'au moins un élément de blocage (3) formé séparément et destiné à s'engager dans un élément d'engagement (27) d'une colonne de direction (4) d'un véhicule, le corps élastique (1) et l'élément de blocage (3) étant ou pouvant être montés de manière à pouvoir pivoter autour d'un axe de pivotement (36) commun et le corps élastique (1) comprenant au moins une languette élastique (2) servant à solliciter élastiquement l'élément de blocage (3) et au moins une partie de fixation (5) servant à fixer le corps élastique (1) sur un boulon (6) de la colonne de direction (4), **caractérisé en ce que** le corps élastique (1) comprend au moins un dispositif d'encliquetage (37) servant à l'encliquetage du corps élastique (1) dans au moins un dispositif d'encliquetage conjugué (43) de l'élément de blocage (3) et à son dégagement de ce dispositif d'encliquetage conjugué.

2. Système selon la revendication 1, **caractérisé en ce que** le corps élastique (1) comprend, en plus de la languette élastique (2), au moins un bras d'entraînement (7) servant à l'entraînement de l'élément de blocage (3) lors d'un mouvement de pivotement du corps élastique (1) autour de l'axe de pivotement (36) et le dispositif d'encliquetage (37) est formé sur le bras d'entraînement (7).

3. Système selon la revendication 1, **caractérisé en ce que** le dispositif d'encliquetage (37) est formé sur la languette élastique (2).

4. Système selon l'une quelconque des revendications 1 à 3, **caractérisé en ce que** le dispositif d'encliquetage (37) ou le dispositif d'encliquetage conjugué (43) comprend au moins une saillie d'encliquetage (30).

5. Système selon l'une quelconque des revendications 1 à 4, **caractérisé en ce que** le dispositif d'encliquetage (37) ou le dispositif d'encliquetage conjugué (43) comprend au moins deux saillies d'encliquetage (30) disposées de manière espacée les unes des autres, lesquelles sont orientées en direction les unes des autres.

6. Système selon l'une quelconque des revendications 1 à 5, **caractérisé en ce que** le dispositif d'encliquetage (37) ou le dispositif d'encliquetage conjugué (43) comprend au moins une ouverture d'engagement (31), laquelle est délimitée par une région de butée (9) ou au moins deux régions de butée (9) en regard les unes des autres.

7. Système selon la revendication 6, **caractérisé en ce que** l'ouverture d'engagement (31) s'étend longitudinalement au moins le long d'une trajectoire circulaire autour de l'axe de pivotement (36).

8. Système selon l'une quelconque des revendications 1 à 7, **caractérisé en ce que** le système comprend en outre un boulon (6) sur lequel le corps élastique (1) est fixé, au moyen de sa partie de fixation (5), de manière solidaire en rotation par rapport à un pivotement autour de l'axe de pivotement (36), l'élément de blocage (3) étant disposé sur le boulon (6) de manière à pouvoir pivoter librement au moins sur une plage et l'axe de pivotement (36) s'étendant dans le boulon (6).

9. Système selon l'une quelconque des revendications 1 à 8, **caractérisé en ce que** l'élément de blocage (3) est, dans l'état encliqueté du dispositif d'encliquetage (37) dans le dispositif d'encliquetage conjugué (43), accouplé de manière forcée au corps élastique (1) lors du pivotement du corps élastique (1) dans au moins un sens de pivotement (12, 13) autour de l'axe de pivotement (36) et/ou le corps élastique (1) peut, dans l'état dégagé du dispositif d'encliquetage (37) hors du dispositif d'encliquetage conjugué (43), pivoter autour de l'axe de pivotement (36) indépendamment de l'élément de blocage (3).

10. Colonne de direction (4) pour un véhicule, laquelle comprend au moins un premier composant (14) et au moins un deuxième composant (15), les composants (14, 15) étant déplaçables les uns par rapport aux autres dans au moins un état de fonctionnement de la colonne de direction (4) et les composants (14, 15) étant ou pouvant être fixés les uns aux autres par le biais d'un dispositif d'immobilisation (20) et/ou d'un dispositif d'absorption d'énergie (21) dans un autre état de fonctionnement de la colonne de direction (4), **caractérisée en ce que** le dispositif d'immobilisation (20) et/ou le dispositif d'absorption d'énergie (21) comprennent au moins un système selon l'une quelconque des revendications 1 à 9.
